## Europäisches Patentamt
## European Patent Office
## Office européen des brevets

(19)

(11) Numéro de publication: **0 003 459**
**B1**

(12) **FASCICULE DE BREVET EUROPEEN**

(45) Date de publication du fascicule de brevet: **02.09.81**

(51) Int. Cl.³: **F 16 K 3/08**

(21) Numéro de dépôt: **79400046.3**

(22) Date de dépôt: **24.01.79**

(54) Tête tournante de robinet.

(30) Priorité: **26.01.78 FR 7802123**
**29.11.78 FR 7833698**

(43) Date de publication de la demande:
**08.08.79 Bulletin 79/16**

(45) Mention de la délivrance du brevet:
**02.09.81 Bulletin 81/35**

(84) Etats Contractants Désignés:
**BE CH DE GB IT LU NL SE**

(56) Documents cités:
**FR - A - 2 180 744**
**US - A - 3 698 418**
**US - A - 3 780 758**

(73) Titulaire: **SOCIETE NOUVELLE IDEAL STANDARD**
**Société Anonyme**
**149, Boulevard Haussmann**
**F-75382 Paris Cedex 08 (FR)**

(72) Inventeur: **Schiller, Jean Pierre**
**4, rue du Collège**
**F-39100 Dole (FR)**
Inventeur: **Chenot, Jacques**
**12, rue de Luminaire**
**F-39420 Champvans (FR)**

(74) Mandataire: **Roger-Petit, Jean-Camille et al,**
**OFFICE BLETRY 2, Boulevard de Strasbourg**
**F-75010 Paris (FR)**

Courier Press, Leamington Spa, England.

## Tête tournante de robinet

La présente invention concerne une tête de robinet destinée â être introduite dans un corps de robinet et appliquée sur une arrivée de fluide débouchant dans le fond de ce corps de robinet, cette tête comportant au moins un joint annulaire d'étanchéité appliqué sur l'arrivée de fluide, un disque d'étanchéité inférieur fixe sollicité vers le joint d'étanchéité, traversé par au moins un orifice d'écoulement de fluide et présentant une surface supérieure plane et polie sur laquelle peut glisser, en un mouvement tournant, et en vue de régler le débit du fluide traversant ce disque inférieur par obturation totale, partielle ou nulle de son ou ses orifices d'écoulement, la surface inférieure et polie d'un disque d'étanchéité supérieur rendu solidaire en rotation, par le moyen de reliefs d'entrainement complémentaires, d'un organe de commande rotatif manoeuvrable â l'extérieur du corps de robinet et dont la partie inférieure est, avec les disques d'étanchéité, logée à l'intérieur d'un boîtier sensiblement cylindrique présentant deux ouvertures latérales, et deux pattes longitudinales, cette tête comprenant en outre deux déflecteurs pour dévier latéralement, vers les ouvertures latérales du boîtier, le fluide arrivant par les bas, et au moins une butée fixe coopérant avec au moins un secteur solidaire en rotation de l'organe de commande pour limiter l'angle de rotation possible de cet organe.

Une tête de robinet de ce type, dit "quart de tour" en raison du fait que le fermeture et l'ouverture complètes sont obtenues, l'une à partir de l'autre, par rotation de 90° environ de l'organe de commande, est connue et notamment décrite dans le US - A - 3 831 621.

Les têtes connues de ce type présentant, en raison du nombre relativement élevé d'éléments qui les constituent, une certaine complexité de structure se traduisant par un encombrement assez important et une fiabilité restreinte, sans que ces inconvénients soient contrebalancés par une valeur élevée de la capacité de débit, la présente invention a pour but de proposer une tête tournante de robinet présente une structure plus simple, utilisant moins de pièces différentes, présentant donc un encombrement réduit et une fiabilité accrue, tout en ayant une capacité de débit élevée. Cette tête peut notamment être construite aux normes dimensionnelles DIN.

L'invention a également pour objectif, dans le cas d'une tête de robinet simplifiée à l'extrême, de proposer des moyens pour éviter les inconvénients pouvant découler de cette extrême simplification de structure.

La tête de robinet conforme à l'invention est essentiellement caractérisée en ce que les pattes longitudinales déterminant, entre elles, deux intervalles formant les deux ouvertures latérales du boîter, le disque supérieur présente au moins une oreille constituant un secteur de limitation d'angle, s'engageant dans une ouverture latérale correspondante du boîtier et susceptible de venir en contact contre une patte longitudinale correspondante constituant ladite buttée fixe, et en ce que le disque supérieur piésente deux cavités diamétralement opposées, creusées sur sa périphérie, à partir de sa surface inférieure et sur une partie seulement de son épaisseur, et jouant notamment le rôle de déflecteurs.

D'autres caractéristiques et avantages de l'invention ressortiront clairement de la description qui en est faite ci-dessous, à titre indicatif et nullement limitatif, en référence au dessin annexé, sur lequel:

Les figures 1A et 1B sont des vues en perspective éclatées d'un premier et d'un second modes de réalisation de cette tête.

Les figures 2A et 2B sont des vues en coupe longitudinales correspondantes de cette tête, dans lesquelles le disque supérieur est vu suivant la ligne de coupe II—II des figures 3A et 3B correspondantes.

Les figures 3A et 3B sont des vues en coupe transversales correspondantes de cette tête de robinet, suivant les lignes III—III des figures 2A et 2B respectives.

Les figures 4A et 4B sont des vues de dessus du disque supérieur de la tête des figures 1A et 1B respectives.

La figure 5B est une vue en coupe longitudinale de la tête suivant la ligne V—V de la figure 2B.

La présente invention concerne une tête 1 de robinet destinée à être vissée dans un corps 2 de robinet pour s'appliquer sur un siège 3 d'une arrivée de fluide 4 débouchant dans le fond du corps 2 de robinet.

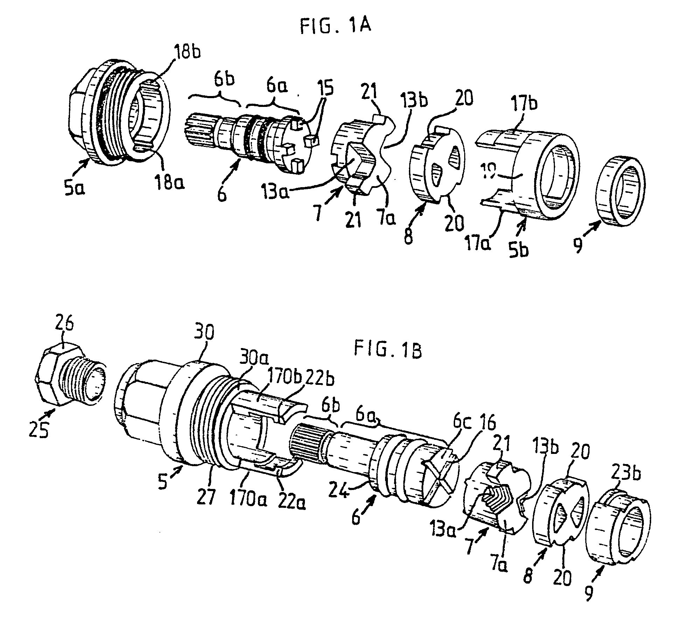

Cette tête comprend un boîtier 5 (figure 1B) ou 5a, 5b (figure 1A) dans lequel sont logés, du haut vers le bas, la partie inférieure 6a d'un organe de commande rotatif 6, un disque d'étanchéité supérieur 7, un disque d'étanchéité inférieur 8 et, au moins partiellement, un joint annulaire d'étanchéité 9.

Des joints d'étanchéité 10 sont, de façon classique, prévus entre le boîtier et le corps du robinet, ainsi qu'entre l'organe de commande et le boîtier.

La partie supérieur 6b de l'organe de commande 6 est accessible de l'extérieur du corps du robinet et comporte des cannelures pour permettre l'adaptation d'une poignée de commande (non représentée).

La rotation de l'organe de commande 6 a pour effet de faire communiquer, ou de cesser de faire communiquer suivant le sens de rotation, l'arrivée de fluide 4 avec la chambre de distribution 11 du corps 2 du robinet à travers des orifices 12a, 12b d'écoulement de fluide prévus dans le disque inférieur 8, à travers des cavités 13A, 13b creusées dans le disque supérieur 7 et à travers des ouvertures latérales 14a, 14b du boîtier 5 ou 5a, 5b.

Ce résultat est obtenu en maintenant fixe le disque inférieur 8 et en rendant le disque supérieur 7 solidaire en rotation de l'organe de commande 6 au moyen de reliefs d'entraînement complémentaires, par exemple d'ergots d'entrainement radiaux 15 de l'organe de commande s'engageant dans deux rainures croisées 16 du disque supérieur 7 (figures 1A, à 4A), ou inversement au moyen d'ergots d'entrainement radiaux 15 du disque supérieur 7 s'engageant dans deux rainures croisées 16 de l'organe de commande (figures 1B à 5B).

En outre les surfaces de contact de deux disques 7 et 8, c'est-à-dire la surface inférieur 7a du disque supérieur et la surface supérieure 8b du disque inférieur, sont rigoureusement planes et polies, de façon à pouvoir glisser et tourner l'une sur l'autre en garantissant l'étanchéité de leur contact, comme décrit dans le FR - A - 1 526 043, et la surface 7a adopte la forme de deux secteurs d'angles droits opposés, susceptible d'obturer totalement, partiellement, ou pas du tout, les orifices 12a, 12b d'écoulement traversant le disque inférieur 8.

Selon un premier mode de réalisation (figures 1A à 4A), le boîtier sensiblement cylindrique 5a, 5b est formé d'un élément supérieur 5a et d'un élément inférieur 5b s'emboîtant l'un dans l'autre au moyen de pattes longitudinales 17a, 17b dont est doté le second, s'engageant dans des logements complémentaires 18a, 18b pratiqués dans le premier. Les pattes longitudinales sont des portions d'un volume cylindrique creux, ont même longueur, forment saillie à l'intérieur de la base cylindrique 19 de l'élément inférieur 5b, et ont une longueur et un profil tels qu'après emboîtement des éléments 5a, 5b de boîtier, ces éléments et les deux pattes laissent entre eux des intervalles constituant les ouvertures latérales de boîtier déjà mentionnées.

Le disque inférieur 8 s'engage dans la base 19 de l'élément de boîtier 5b et présente deux décrochements 20 destinés à recevoir les saillies formées par les pattes 17a, 17b, en vue d'assurer la fixité de ce disque.

Selon un second mode de réalisation (figures 1B à 5B), le boîtier 5 est constitué par un logement supérieur sensiblement cylindrique 30, de l'extrémité inférieure 30a duquel sont rendues solidaires deux pattes longitudinales diamétralement opposées 170a, 170b. Ces pattes longitudinales sont des portions d'un volume cylindrique creux, ont même longueur, se développent chacune sur un angle au centre d'environ 90°C et déterminent entre elles des intervalles constituant les ouvertures latérales 14a, 14b précédemment mentionnées.

Le disque inférieur 8 présente deux décrochements 20 destinés à recevoir les pattes 170a, 170b, et à assurer ainsi l'immobilisation en rotation de ce disque inférieur.

Dans les deux modes de réalisation, le disque supérieur 7 présente deux secteurs 21 de limitation de l'angle de rotation de l'organe de commande, constitués par deux oreilles périphériques diamétralement opposées, s'engageant dans les ouvertures latérales 14a, 14b du boîtier et susceptibles de venir simultanément en butée contre les bords opposés des deux pattes longitudinales 17a et 17b ou 170a, 170b, en vue de limiter le mouvement de rotation. Pour que ce mouvement soit limité à un quart de tour, les angles au centre de chacun des secteurs 21 et de chacune des pattes sont évidemment complémentaires.

Les cavités 13a, 13b du disque supérieur, diamétralement opposées comme le sont orifices 12a, 12b du disque inférieur, sont creusées à partir de la surface inférieure 7a et de la périphérie cylindrique de ce disque supérieur 7, mais sur une partie seulement de l'épaisseur de ce dernier, et s'ouvrent latéralement sur cette périphérie cylindrique, afin de remplir, outre la fonction d'un passage de fluide, celle de déflecteurs pour ce fluide arrivant par le bas et ainsi dévié latéralement.

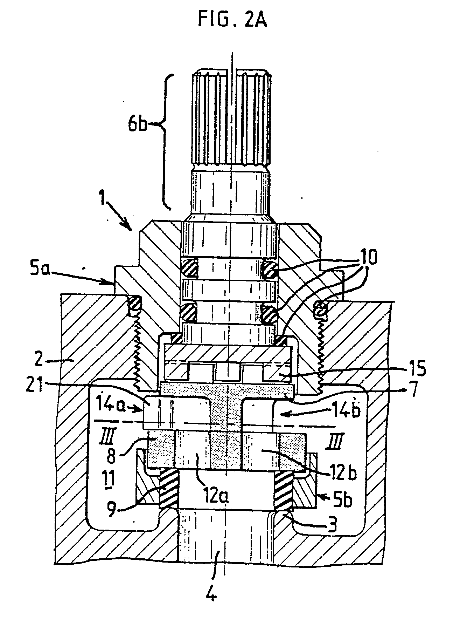

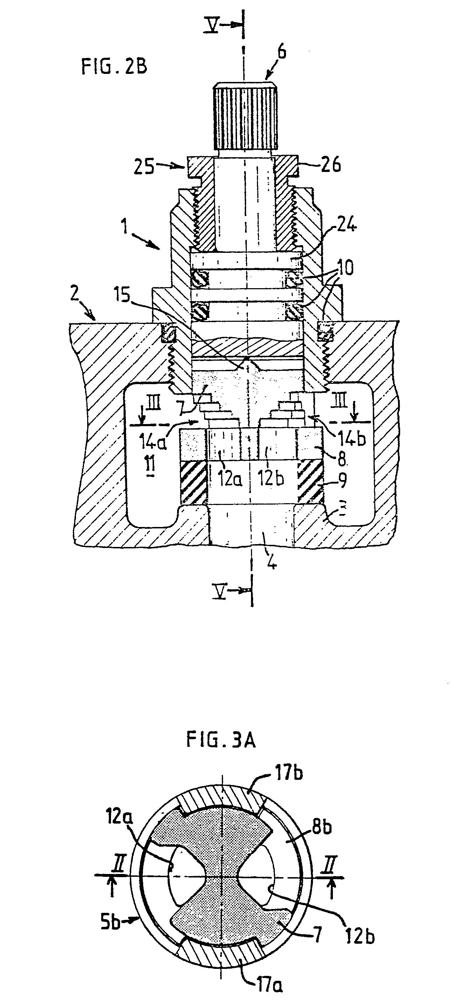

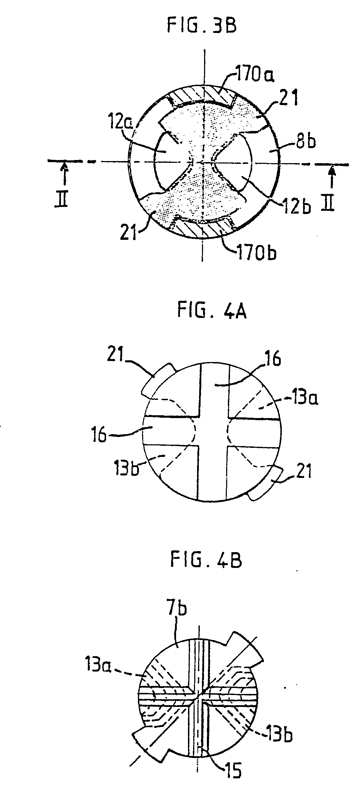

Comme le montrent notamment les figures 2B et 4B, le fond de ces cavités peut être conformé en gradins, de manière à hassurer la formation d'un matelas amortisseur fluide, qui limite l'impact des veines de fluide et diminue le niveau sonore en favorisant l'évacuation tangentielle du fluide.

Le joint annulaire d'étanchéité 9 est une bague cylindrique constituée d'un matériau élastique tel que le caoutchouc ou une matière plastique de synthèse et présentent une hauteur supérieure à son épaisseur. Cette bague 9, en partie engagée dans l'élément inférieur 5b de boîtier dans le premier mode de réalisation, et diamétralement enserrée entre les pattes longitudinales 170a, 170b dans le second mode de réalisation, est destinée à être comprimée dans le sens de sa hauteur, lorsque la tête de robinet 1 est vissée dans le corps 2, entre le siège 3 de l'arrivée de fluide 4 et la surface inférieure du disque inférieur. Par son effet de stockage d'énergie, cette bague 9 assure ainsi, à elle seule, l'application des deux disques l'un sur l'autre et l'étanchéité entre les disques d'une part en entre l'arrivée de fluide et le disque inférieur d'autre part.

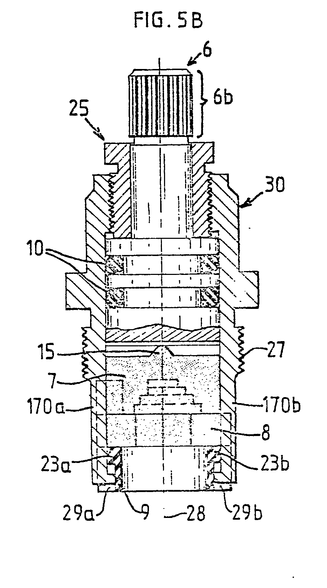

Selon le second mode de réalisation, dont il sera dorénavant essentiellement question (figures 1B à 5B), chacune des deux pattes longitudinales 170a, 170b, présente à son extrémité inférieure (figures 1B et 5B) un relief interne 22a, 22b, tandis que la bague d'étanchéité 9 présente, au moins sur la partie de sa périphérie par laquelle cette bague est enserrée entre les pattes 170a, 170b, un relief externe 23a, 23b. Les reliefs externes de la bague et les reliefs internes des pattes longitudinales coopèrent pour permettre un coulissement axial de la bague entre les pattes, mais pour en interdire le dégagement axial sans déformation radiale de la bague, à la façon d'un encliquetage.

Les reliefs externes de la bague sont par exemple constitués par deux collerettes périphériques supérieures formées dans deux creux longitudinaux 29a, 29b recevant les deux saillies 22a, 22b constituant les reliefs internes des pattes.

Ainsi enserrée entre les pattes 170a, 170b avec pour seule liberté de mouvement un coulissement axial d'amplitude limitée, la bague 9 constitue un organe d'arrêt propre à maintenir les disques 7, 8 et l'organe de manoeuvre 6 à l'intérieur du boîtier 5.

L'organe de commande 6, essentiellement constitué d'une tige, présente une nervure périphérique externe supérieure 24 desinée à être logée dans la partie supérieure 30 du boîtier 5. Ce logement est taraudé intérieurement, au moins sur la partie supérieure de sa hauteur, et est d'un diamètre supérieur à celui que présente l'organe de commande au-dessus de la nervure 24.

Un écrou annulaire ou bague filetée 25 est engagé dans le taraudage du logement 30, est axialement traversé par l'organe de commande, prend appui, avec possibilité de glissement relatif, sur la nervure périphérique 24 dans une direction axiale, et présente de surfaces de prise 26 accessibles de l'extérieur du boîtier, en vue du vissage de cet écrou annulaire dans le logement de la partie supérieure 30. Le rôle de l'écrou annulaire 25 est le suivant: initialement, cet écrou est dévissé, et la tête de robinet est, par le filetage externe 27 du logement 30, vissé à fond dans le corps 2 de robinet. Puis l'écrou annulaire est vissé à son tour. Au cours de ce vissage, on fait cependant en sorte que l'organe de commande 6 n'effectue aucune rotation. Cet organe de commande effectue donc une pure translation vers le siège 3, sur lequel la bague d'étanchéité 9 se trouve comprimée, par un pur mouvement axial, par l'intermédiaire des disques 7 et 8 poussés par l'organe de commande. L'absence de tout effort de cisaillement sur la bague 9, obtenue par ce mode de réalisation, est particulièrement importante en raison de la faible amplitude angulaire des éléments de maintien de la bague d'étanchéité 9, qui présente évidemment une déformabilité accrue.

Comme le montrent les figures 1B, 2B et 5B, la surface inférieure 6c de l'organe de commande 6 et la surface supérieure 7b du disque supérieur 7 sont parallèles à la surface inférieure 7a de ce dernier et perpendiculaires à l'axe longitudinal 28 de la tête de robinet. Les rainures 16 formées dans la surface 6c de l'organe de commande 6 et s'étandant, par rapport à l'axe 28, dans une direction radiale et transversale, ont une section transversale triangulaire, tandis que les ergots 15 prévus sur la surface supérieure 7b du disque supérieur, et destinés à s'engager dans les rainures 16, ont une section transversale triangulaire, trapézoïdale ou hémicirculaire. En raison de la présence des surfaces inclinées à moins de 90°, par rapport à la surface 7b, que forment les rainures 16, tout effort de rotation appliqué à l'organe de commande 6 présente une composante perpendiculaire à la surface 7b, tendant à écarter le disque supérieur 7 de l'organe de commande 6 en comprimant davantage la bague d'étanchéité 9. Lorsque les orielles 21 du disque supérieur 7 sont en butée contre les bords des pattes longitudinales 170a, 170b, toute rotation supplémentaire du disque 7 risque normalement d'entraîner une rupture de ses oreilles 21. Les formes décrites des reliefs d'entraînement 15, 16 qui réalisent un limiteur de couple, permettent d'éviter cette rupture. En effet, lorsque les oreilles sont en butée contre les bords des pattes 170a, 170b, toute rotation ultérieure de l'organe de commande 6 se traduit, non par une rotation du disque 7, mais par une translation en direction du siège 3. Lorsque l'amplitude de cette translation a atteint la hauteur des ergots 15, ces derniers échappent aux rainures 16 et l'organe de commande continue de tourner sans aucun effet d'entraînement, et par conséquent, sans risque de rupture des oreilles 21.

En raison de leur forme en croisillon et de leur section, les reliefs d'entraînement 15, 16 permettent en outre de prévenir tour décentrage de l'axe de rotation de l'organe de manoeuvre et de celui du disque supérieur, donc d'éviter les risques d'une usure importante.

**Revendications**

1. Tête tournante (1) de robinet destinée à être introduite dans un corps (2) de robinet et appliquée sur une arrivée de fluide (4) débouchant dans le fond de ce corps (2) de robinet, cette tête comportant au moins un joint annulaire d'étanchéité (9) appliqué sur l'arrivée de fluide (4), un disque d'étanchéité inférieur (8) fixe sollicité vers le joint d'étanchéité (9), traversé par au moins un orifice (12a, 12b) d'écoulement de fluide et présentant une surface supérieure (8b) plane et polie sur laquelle peut glisser, en un mouvement tournant, et en vue de régler le débit du fluide traversant ce disque inférieur (8) par obturation totale, partielle ou nulle de son ou ses orifices (12a, 12b) d'écoulement, la surface inférieure (7a) plane et polie d'un disque d'étanchéité supérieur (7) rendu solidaire en rotation, par le moyen de reliefs d'entraînement complémentaires (15, 16), d'un organe de commande rotatif (6) manoeuvrable à l'extérieur du corps (2) de robinet et dont la partie inférieure (6a) est, avec les disques d'étanchéité (7, 8), logée à l'intérieur d'un boîtier (5, 5a, 5b) sensiblement cylindrique présentant deux ouvertures latérales (14a, 14b) et deux pattes longitudinales (17a, 17b, 170a, 170b), cette tête (1) comprenant en outre deux déflecteurs (13a, 13b) pour dévier latéralement, vers les ouvertures latérales (14a, 14b) du boîtier (5, 5a, 5b), le fluide arrivant par le bas, et au moins une butée fixe coopérant avec au moins un secteur solidaire en rotation de l'organe de commande pour limiter l'angle de rotation possible de cet organe, caractérisée en ce que les pattes longitudinales (17*a*, 17*b*, 170a, 170b) déterminent, entre elles, deux intervalles constituant les deux ouvertures latérales (14*a*, 14*b*) du boîtier (5), en ce que le disque supérieur (7) présente au moins une oreille (21) constituant un secteur de limitation d'angle, s'engageant dans une ouverture latérale (14*a*, 14*b*) correspondante du boîtier et susceptible de venir en contact sur une patte longitudinale (17*a*, 17*b*, 170a, 170b) corrrespondante constituant ladite butée fixe, et en ce que le disque supérieur (7) présente deux cavités diamétralement opposées (13*a*, 13*b*), creusées sur sa périphérie, à partir de sa surface inférieure et sur une partie seulement de son épaisseur, et jouant notamment le rôle de déflecteurs.

2. Tête de robinet suivant la revendication 1, caractérisée en ce que ledit joint annulaire d'étanchéité (9) est une bague cylindrique faite d'un matériau élastique et présentant une hauteur supérieure à son épaisseur, cette bague étant partiellement engagée dans le boîtier (5, 5a, 5b), et assurant à elle seule, par la pression qu'elle exerce en réaction au vissage de la tête (2) de robinet dans le corps, une étanchéité entre l'arrivée de fluide (4) et le disque inférieur (8) d'une part, et entre les deux disques d'étanchéité supérieur (7) et inférieur (8) d'autre part.

## Claims

1. Rotating tap head (1) designed to be inserted in a tap body (2) and applied to a fluid inlet (4) communicating with the base of this tap body (2), the head comprising at least one annular sealing joint (9) applied to the fluid inlet (4), a lower sealing disc (8) which is fixed and urged towards the sealing joint (9) and which is traversed by at least one fluid flow aperture (12a, 12b) and has a plane polished upper surface (8b) on which may slide, with a rotary movement, and in order to adjust the rate of flow of the fluid traversing this lower disc (8) by complete, partial or non closure of its flow aperture(s) (12a, 12b), inner plane polished surface (7) of an upper sealing disc (7) which is rotationally rigid, by means of supplementary drive projections (15, 16) with a manual rotary control element (6) on the exterior of the tap body (2) and whose lower portion (6a) is, with the sealing discs (7, 8) housed within a substantially cylindrical housing (5, 5a, 5b) having two lateral apertures (14a, 14b) and two longitudinal lugs (17a, 17b, 170a, 170b), this head further comprising two deflectors (13a, 13b) for the lateral deflection towards the lateral apertures (14a, 14b) of the housing (5, 5a, 5b), the fluid arriving from the bottom, and at least one fixed stop engaging with at least one sector which is rotationally rigid with the control element in order to limit the possible angle of rotation of this element, characterised in that the longitudinal lugs (17a, 17b, 170a, 170b) define two spaces between each other constituting the two lateral apertures (14a, 14b) of the housing (5), in that the upper disc (7) has at least one flange (21) constituting an angular limitation sector engaging with a corresponding lateral aperture (14a, 14b) of the housing and which may contact a corresponding longitudinal lug (17a, 17b, 170a, 170b) constituting the said fixed stop, and in that the upper disc (7) has two diametrically opposite recesses (13a, 13b), provided on its periphery, extending from its inner surface and over one portion only of its thickness, and acting in particular as deflectors.

2. Tap head as claimed in claim 1, characterised in that the said annular sealing joint (9) is a cylindrical ring of a resilient material and has a height greater than its thickness, this ring being partially engaged in the housing (5, 5a, 5b) and itself ensuring by the pressure which it exerts as a reaction of the screwing of the tap head (2) into the body sealing between the fluid inlet (4) and the lower disc (8) on one hand, and between the two upper (7) and lower (8) sealing disks, on the other hand.

## Patentansprüche

1. Drehventilkopf (1) für den Einbau in ein Ventilgehäuse (2) zum Absperren einer in dessen Boden mündenden Flüssigkeitszuleitung (4), mit mindestens einer auf der Flüssigkeitszuleitung (4) aufsitzenden Ringdichtung (9), einer unteren, feststehenden und gegen die Ringdichtung (9) gedrückten Dichtscheibe (8), durch die mindestens eine Durchflußöffnung (12a, 12b) verläuft und die eine ebene, polierte obere Fläche (86) aufweist, auf der zum Steuern des Flüssigkeitsdurchsatzes durch die untere Dichtscheibe (8) durch völliges oder teilweises Sperren oder Freigeben der Durchflußöffnung(en) (12a, 12b) die ebene, polierte untere Fläche (7a) einer oberen Dichtscheibe (7) drehend gleiten kann, die durch komplementäre Mitnahmevorsprünge (15, 16) drehfest mit einem drehbaren Betätigungsglied (6) verbunden ist, welches von außerhalb des Ventilgehäuses (2) betätigbar ist und dessen unterer Teil (6a) zusammen mit den Dichtscheiben (7, 8) innerhalb eines im wesentlichen zylindrischen Käfigs (5, 5a, 5b) angeordnet ist, der zwei seitliche Öffnungen (14a, 14b) und zwei Längsfortsätze (17a, 17b 170a, 170b) aufweist, sowie mit zwei Ablenkflächen (13a, 13b) zum seitlichen Umlenken der von unten zuströmenden Flüssigkeit zu den seitlichen Öffnungen (14a, 14b) des Käfigs (5, 5a, 5b) und mindestens einem feststehenden Anschlag, der mit mindestens einem mit dem Betätigungsorgan drehfest verbundenen Sektor zum Begrenzen des möglichen Drehwinkels des betätigungsorgans zusammenwirkt, dadurch gekennzeichnet, daß die Längsfortsätze (17a, 17b, 170a, 170b) zwischen sich zwei, die seit-

lichen Öffnungen (14a, 14b) des Käfigs (5) bildende Zwischenräume begrenzen, daß die obere Dichtscheibe (7) mindestens einen Vorsprung (21) aufweist, der einen Sektor für die Drehwinkelbegrenzung bildet und in eine zugehörige seitliche Öffnung (14a, 14b) des Käfigs eingreift und zur Anlage an einen den festen Anschlag bildenden Längsfortsatz (17a, 17b, 170a, 170b) kommen kann, und daß die obere Dichtscheibe (7) zwei einander diametral genenüberliegende Ausnehmungen aufweist, die von deren unteren Fläche ausgehend sich nur über einen Teil von deren Dicke erstrecken und zu deren Umfang hin offen sind und insbesondere als Ablenkflächen wirken.

2. Ventilkopf nach Anspruch 1, dadurch gekennzeichnet, daß die Ringdichtung (9) ein zylindrischer Ring aus elastischem Material ist, dessen Höhe größer als die Dicke ist und der teilweise in dem Käfig (5) aufgenommen ist und der für sich allein durch den Druck, den er als Reaktion auf das Einschrauben des Ventilkopfes (2) in das Gehäuse ausübt, die Abdichtung einerseits zwischen der Flüssigkeitszuleitung (4) und der unteren Dichtscheibe (8) und andererseits zwischen der oberen (7) und unteren Dichtscheibe (8) bewirkt.

0 003 459

FIG. 1A

FIG. 1B

1

0 003 459

FIG. 2A

2

FIG. 2B

FIG. 3A

FIG. 3B

FIG. 4A

FIG. 4B

## FIG. 5B